# EUROPÄISCHE PATENTSCHRIFT

(11) **EP 2 327 623 B1**
(45) Veröffentlichungstag und Bekanntmachung des Hinweises auf die Patenterteilung: **06.11.2013**
(21) Anmeldenummer: 10075605.5
(22) Anmeldetag: 01.04.2000
(51) Int. Cl.: B64C 3/48, B63H 9/06, B64D 11/06, B60N 2/22, B60N 2/64, A47C 7/44

(54) **Stuhl**
Chair
Chaise

(30) Priorität: 01.04.1999 DE 19916411
(43) Veröffentlichungstag der Anmeldung: 01.06.2011
(62) Teilanmeldung aus: 00250109.6
(73) Patentinhaber: Kniese, Leif, 14129 Berlin (DE)
(72) Erfinder: Kniese, Leif, 14129 Berlin (DE)
(74) Vertreter: Grünecker, Kinkeldey, Stockmair & Schwanhäusser

(56) Entgegenhaltungen:
- EP-A- 0 860 355
- AU-A- 6 563 380
- LU-A- 88 528

## Beschreibung

Die Erfindung betrifft einen Stuhl.

Aus der EP 0 860 355 A1 ist ein aerodynamisches Bauteil für Flugzeugkonstruktionen bekannt, das in der Lage ist, seinen Querschnitt zu verändern und so das Gesamtprofil des aerodynamischen Bauteils zu beeinflussen. Hierbei kommt es nur auf die veränderbare aerodynamische Ausgestaltung der Vorrichtung an. Diese muss den Gesetzen des Leichtbaus folgen. Aktuatoren müssen das Profil in den engen Grenzen der Aerodynamik über Streben verstellen und in einer vorherbestimmten Position fixieren, um ein strömungsgünstiges Profil zu gewährleisten.

Bei der EP 0 453 713 A1 handelt es sich ebenfalls um ein aerodynamisches Bauteil, das aus einem vorderen, einem mittleren und hinterem Segment zusammengesetzt ist und über eine Achse senkrecht zur Skelettlinie des Flügels miteinander verbunden ist. Über diese Achse lässt sich das Profil des Flügels verändern.

Aus der DE 44 11 610 A1 ist ein Flossenantrieb bekannt, der eine tragflügelförmige Profilform aufweist und umkehrbar flexibel ausgebildet ist. Dies wird durch ein Federflächenblatt erreicht, das jeweils entgegen der Bewegungsrichtung der Flosse gekrümmt ist.

Aus der AU 6 563 380 ist ein Bauteil bekannt, das zwei flexible Wangen aufweist und wird als nächstliegender Stand der Technik betrachtet.

Aufgabe der vorliegenden Erfindung ist es, einen Stuhl zu schaffen, der flexibel ist, jedoch in sich ein stabiles System darstellt und der auf Druckeinwirkung impulsumwandelnd reagiert.

Gelöst wird diese Aufgabe durch eine Stuhllehne und/oder eine Sitzfläche, umfassend ein Bauteil mit mindestens zwei flexiblen Wangen, die in einer keilförmigen Grundform an einem Ende zusammenlaufen und dort verbunden sind und am anderen Ende in einem Abstand voneinander befestigt sind und die durch Distanzhalter miteinander verbunden sind, die an den Wangen drehbar befestigt sind.

Bei Druck auf die Außenhaut des erfindungsgemäß als Stuhllehne und/oder Sitzfläche ausgestalteten Bauteils gibt der Teil mit der höchsten Auflastdichte nach; gleichzeitig werden das stumpfe und das spitze Ende entgegen der Druckrichtung ausgelenkt. Es entsteht eine Mulde, wobei das spitze Ende und das stumpfe Ende des Gerüsts eine der Druckrichtung entgegengesetzte Bewegung ausführen.

Die Streben werden dabei indirekt über die eingeleitete Kraft auf die Außenhaut verstellt oder über die Achse eingeleitet. Um den Effekt noch zu vergrößern, ist ein Hebel vorgesehen, der direkt an einer der Streben angelenkt wird und für die Momentabstützung fest mit der Achswelle verbunden ist. Dadurch wird zusätzlich auch eine Kraft von der Strebe auf die Außenhaut eingeleitet und nicht ausschließlich über die Außenhaut auf die Streben. Durch die Formgebung der Außenhaut und der Anordnung der Streben, die ein Gerüst bilden, wird ein Drehmoment in die Achswelle eingeleitet, die Außenhaut entgegen der Bewegungsrichtung ausgelenkt.

Durch die Streben wird die flexible, aber formhaltige Unter- und Oberseite der Außenhaut, die zusammen eine einstückige Einheit ergeben, jeweils in die entgegengesetzte Richtung ausgelenkt. Dies ist auch der Fall, wenn ein Drehmoment über die Achswelle am stumpfen Ende auf das Bauteil übertragen wird. Dieser Effekt wird noch durch einen angelenkten Hebel, der mit einer der Streben in direkter Wirkverbindung steht, verstärkt. Ein Verstellen der Streben und damit auch ein Verändern der Form der Außenhaut, kann auch durch Servomotoren geschehen, die diagonal zwischen dem unteren und oberen Ende der Streben angeordnet sind.

Derartige Bauteile können auch in Stuhllehnen und Sitzflächen verbaut werden. Durch die Kombination von zwei Gerüsten, die am stumpfen Ende über einer gemeinsamen Achswelle miteinander verbunden sind, entsteht ein Stuhl und/oder Sessel, der in der Lage ist, eine Person aufzunehmen und sich der Anatomie der Person anzupassen.

Auch der Einsatz als Hubgabeln in Gabelstapler ist denkbar, ebenso die Verwendung als Höhenruder, beispielsweise in Luftschiffen. Auch ergibt sich die Möglichkeit, die Vorrichtung beispielsweise als Flosse für Sport- und Berufstaucher einzusetzen. Bei einer derartigen Ausführung ist keine Achswelle vorgesehen. Hierbei werden mehrere parallel angeordnete Gitter mit dem stumpfen Ende am Schuh der Flosse einstückig angeformt.

Die beabstandeten Gitter werden über ein membraneartig ausgebildetes Elastomer verbunden.

Aufgrund der vergleichbaren Auswirkungen eines Hebels auf flüssige und gasförmige Stoffe, kommen folgende Betrachtungen für beide Stoffe gemeinsam in Betracht. lst daher im Folgenden von Wasser die Rede, so gilt die Betrachtungsweise in gleichem Maße auch für Gase und umgekehrt.

Bei einer Flosse, die im Wasser bewegt wird, kann nur soviel Kraft übertragen und in Vorschub umgewandelt werden, wie die Schaufelkonstruktion bzw. Schaufelmaterial, aufnehmen kann. Wird diese Kraft überstiegen, wandelt sich ein Teil der geleisteten Arbeit nur in Verformung der Konstruktion bzw. des Materials um oder ruft im Wasser Wirbel hervor, die Energie verbrauchen, die nicht zur Vortriebsenergie umgewandelt werden kann.

Der Endpunkt einer Flosse schwenkt dieser bei der Auf- und Abwärtsbewegung des Fußes hinterher. Dabei geht ein Teil der aufgewendeten Energie an die Umgebung verloren. Dieses Hinterhergleiten wird bei einigen Flossen zum zeitverzögertem Vorschub ungewandelt.

Bisherige Ausführungen versuchen, diesen Mangel dadurch auszugleichen, dass sie den Bewegungsablauf in eine wasserverdrängende Vorverformung und eine anschließende aus der Verformung hergeleiteten Schubbewegung umwandeln, indem sie sich an der bewegten Wassermenge mit Hilfe der Federwirkung des Flossenblattes abstoßen. Durch diese Verzögerung wird aber bereits Wasser bewegt, welches nicht mehr zum Vorschub zur Verfügung steht.

Auch hier findet, wie oben unter den festen Stoffen beschrieben, lediglich eine Winkeländerung statt. Die Flosse, die an sich das Bestreben hat, gerade zu sein, wird bei einem nach unten gerichteten Tritt um den trägen Wasserkörper gebogen, wobei die Hinterkante tendenziell das Bestreben hat, sich der Verformung zu entziehen. Daraus ergibt sich ein Druck auf das darüberliegende ruhige Wasser, das entgegen der Vorschubrichtung bewegt wird und wiederum Energieverluste erzeugt.

Wenn man den Keil bei einer fortlaufenden Hin- und Herbewegung betrachtet, der zwischen der gebogenen Schaufel und der gedachten Linie entsteht, die sich ergibt, wenn der Flosse kein Druck entgegenstehen würde (Hebelachse), zeigt sich, dass die Flosse auf die im Keil befindliche Masse keine Energie mehr ausüben kann, da sie sich an ihrem Wendepunkt befindet und in die andere Richtung zu verformen beginnt. Diese Masse kann folglich nicht mehr zur Energienutzung verwendet werden.

Die Teilchen auf der druckabgewandten Seite, die durch den entstehenden Unterdruck hinterhergezogen werden, heben einen Teil des oben beschriebenen Energieverlustes wieder auf, indem sie die Flosse, obwohl schon Gegendruck ausgeübt wird, noch weiter in den Keilbereich hineinschieben, können diesen Verlust allerdings nicht vollständig ausgleichen. Zusätzlich ergibt sich durch die Verformung eine Verkleinerung der Wirkungsfläche infolge der durch die Verformung entstehenden Verkürzung im Verhältnis zur Wirkungsebene (Hebelachse). Bei einem starren Hebel würde zwar keine Verkürzung eintreten, allerdings treten mangels Elastizität vermehrte Wirbel auf.

Um Nachteile der bekannten Kraftübertragungshebel zu beseitigen, wird bei der Erfindung ein Übertragungshebel auf physikalische Körper durch Erzielung eines höheren Wirkungsgrades und der damit verbundenen größeren Kraftübertragung, auch von Antriebsmaschinen ermöglicht. Der Stuhl ist in der Lage, eine lokale Systemverformung, die aus einer Impulseinwirkung entsteht, zeitgleich durch eine Verformung des Systems an anderer Stelle in gleicher Stärke in Richtung des Ursprungsimpulses synchron dynamisch entgegen zu setzen und auszugleichen.

Erfindungsgemäß wird eine aus dem Druck resultierende Verformung bewirkt. Dabei weicht das Bauteil nicht dem Druck aus, sondern stellt sich ihm entgegen und leitet ihn in das System. Durch diese Maßnahmen ist es folglich möglich, zwei Punkte elastisch miteinander zu verbinden, ohne dass diese sich am gegenüberliegenden Ende befinden bzw. durch eine Haltevorrichtung miteinander verbunden sein müssen. Ebenso können diese Endpunkte trotz einer aus Druckausübung resultierenden Verformung auf einer Achse bleiben.

Dadurch wird sowohl die Kraftübertragung maximiert und ein Entweichen bei festen Stoffen verhindert als auch der Energieverlust durch Verwirbelungen verkleinert.

Das Bauteil zur Aufnahme von Kräften kann mit einer flexiblen Außenhaut, die von einem Gerüst aus an der Innenseite der Außenhaut anscharnierten, in Verbindungsmitteln auslenkbaren Querstreben zu einem im Querschnitt doppelkonvexen Profil gehalten ist, versehen sein, wobei die Querstreben bei einer Krafteinwirkung auf eine Seite der Außenhaut die Enden der belasteten Außenhautseite gegen die Richtung der Krafteinwirkung auslenken.

Bei dem Bauteil kann die Außenhaut ein parabolisch gerundetes stumpfes Ende und ein diesem gegenüberliegendes spitzes Ende aufweisen und seitenversetzt parallel zu dem stumpfen Ende ein als zweiseitiger Hebel ausgebildetes Vorprofil angeordnet sein.

Ferner können bei dem Bauteil in einer der beiden obigen Ausgestaltungen das stumpfe Ende und das Vorprofil auf einer gemeinsamen Achswelle. gegeneinander verschwenkbar angeordnet sein, wobei eine erste Querstrebe über ein Befestigungsmittel derart mit dem Vorprofil verbunden sein kann, dass sie bei einer auf das Vorprofil gerichteten Krafteinwirkung eine dieser entgegengesetzte Bewegung und bei einer auf die Außenhaut gerichteten Krafteinwirkung eine dieser gleichgerichtete Bewegung ausführt.

Bei dem Bauteil in einer der obigen Ausgestaltungen kann weiter vor der ersten Querstrebe im Bereich des stumpfen Endes ein mit diesem einstückig verbundenes, mit einem Freiraum gegenüber der Innenseite der Außenhaut freiliegendes Innenprofil vorgesehen sein und das Innenprofil die Achswelle aufnehmen.

Bei dem Bauteil in einer der obigen Ausgestaltungen können auch die Streben über die Außenhaut miteinander verbunden sein und in wechselseitiger Wirkverbindung stehen.

Bei dem Bauteil in einer der obigen Ausgestaltungen kann des Weiteren ein an der gemeinsamen Achswelle angreifendes Drehmoment das spitze Ende in Richtung des Drehmoments und das stumpfe Ende gegen die Richtung des Drehmoments auslenken.

Bei dem Bauteil in einer der obigen Ausgestaltungen kann ferner die Krafteinwirkung mittels dynamischen Hebels über eine Achswelle erfolgen, die in ihrer Lage veränderbar ist, wobei der Hebel aus einem Segment besteht, das sich nach oben und/oder unten ausdehnt und an wenigstens zwei benachbarten Punkten befestigt ist, so dass sich daraus ein keilförmiges Strebengerüst ergibt, das in einem Berührungspunkt an seinem spitzen Ende miteinander verbunden ist und von den längenkonstanten Streben in variablem Abstand gehalten wird.

Des Weiteren können bei dem Bauteil in einer der obigen Ausgestaltungen die Ausdehnung der Streben in gelenkigen Außenwangen in ihrer Längenausdehnung elastisch zug- und druckstabil ausgebildet sein, wobei die Außenwangen von ihren Befestigungspunkten geradlinig, gleichlang zu ihrem gemeinsamen Verbindungspunkt verlaufen.

Auch können bei dem Bauteil in einer der obigen Ausgestaltungen die Außenwangen von ihren Befestigungspunkten verschiedenlang zu ihrem gemeinsamen Verbindungspunkt verlaufen, wobei eine beliebige Anzahl von Querstreben parallel, verspreizt zueinander, mit den stumpfen Enden zueinander in einer Linie, oder sternförmig angeordnet und die jeweils nebeneinanderliegenden Querstreben mit der Außenhaut umhüllt sind.

Schließlich können bei dem Bauteil in einer der obigen Ausgestaltungen die Seitenansicht einer Querstrebe variabel und die einander zugehörigen Wangen keilförmig stehen, geradlinig, konvex, konkav, konvex/konkav, S-förmig oder als anwendungsabhängige Freiform ausgebildet sein, wobei die Querstreben Verbindungsbauteile in variablem Abstand eingestellt sind und eine Querstrebe eine flächige Ausdehnung aufweist und die Wangen von einer Fläche gebildet werden, deren Sprossen zwischen den Flächen punktuell oder als durchlaufende Bänder angeordnet sind.

Weitere vorteilhafte Maßnahmen sind in den Unteransprüchen beschrieben. Die Erfindung ist in der beiliegenden Zeichnung dargestellt und wird nachfolgend näher beschrieben.

Es zeigen:
- Fig. 1: Darstellung einer Hubgabel mit einer zylindrischen Auflast und die Verformung der Hubgabel beim Anheben der Auflast und deren dynamisches Verhalten;
- Fig. 2: Darstellung des erfindungsgemäßen Bauteils und die dynamische Reaktion beim Heben einer zylindrischen Auflast;
- Fig. 3a-c: den Bewegungsablauf und die Verformung einer herkömmlichen Flosse im Wasser und die Verkürzung der wirksamen Länge der Flosse;
- Fig. 4a-c: den Bewegungsablauf des erfindungsgemäßen Bauteils in einer Ausführungsform als Flosse im Wasser und das Konstanthalten der wirksamen Länge der Flosse;
- Fig. 5: Grundskizze des erfindungsgemäßen Bauteils im ge- und entspannten Zustand;
- Fig. 6a-d: das erfindungsgemäße Bauteil als Strebe ausgebildet und mit einer elastomeren Membrane verspannt, in Parallelanordnung, Streben beweglich zueinander angeordnet, verspreizt angeordnet und in Sternform angeordnet;

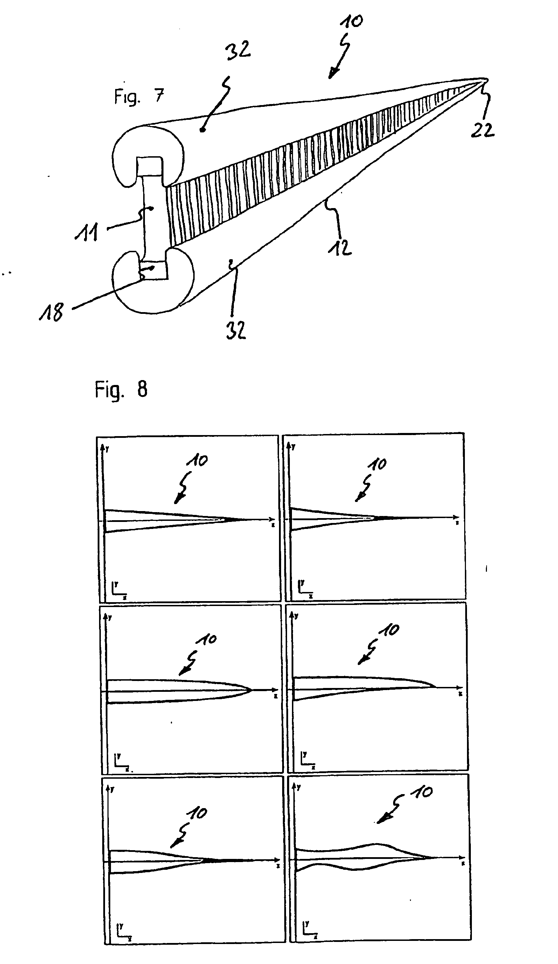

- Fig. 7: Strebe mit zwei U-förmig ausgebildeten Außenwangen, in den die Querstreben an flexiblen Befestigungsmittel gelagert werden;
- Fig. 8a-f: Darstellung der Seitenansichten von erfindungsgemäßen Bauteilen in ihren verschiedenen Ausführungsbeispielen;

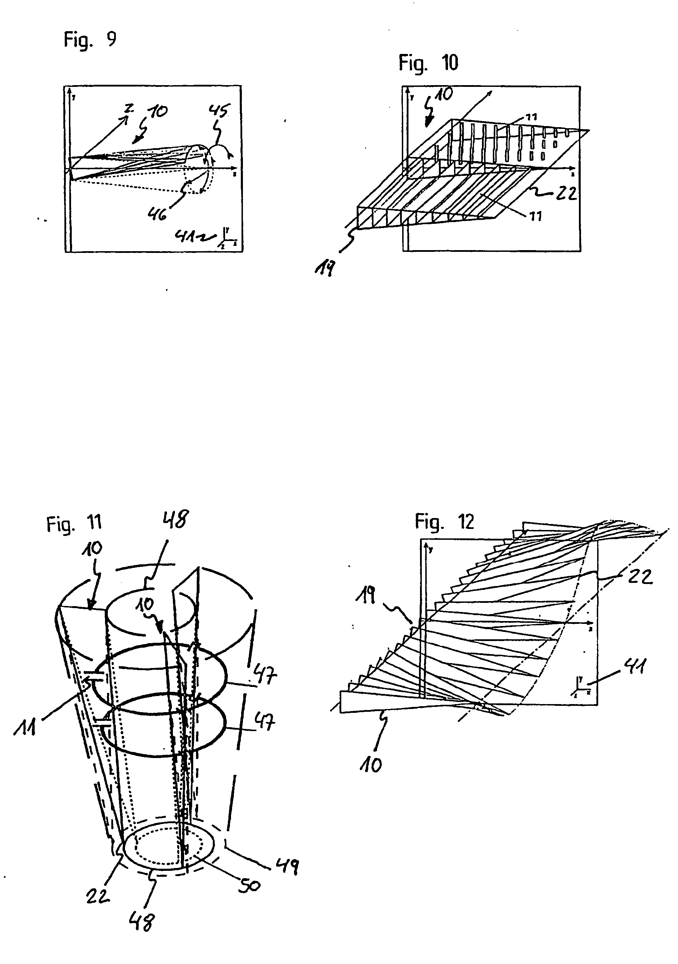

- Fig. 9: eine kombinierte Auf- und Seitwärtsbewegung des Bauteils;
- Fig. 10: ein zu einer Fläche geschlossenes Bauteil mit seinen unterschiedlichen Distanzhaltern;
- Fig. 11: die Bauteile um eine Rohrform gruppiert mit sich verjüngender und verbreitender Stellung und zwei Stabilisationsringen;
- Fig. 12: eine individuell ansteuerbare Bauteilreihe, die einen wellenförmigen Bewegungsablauf ausführt;

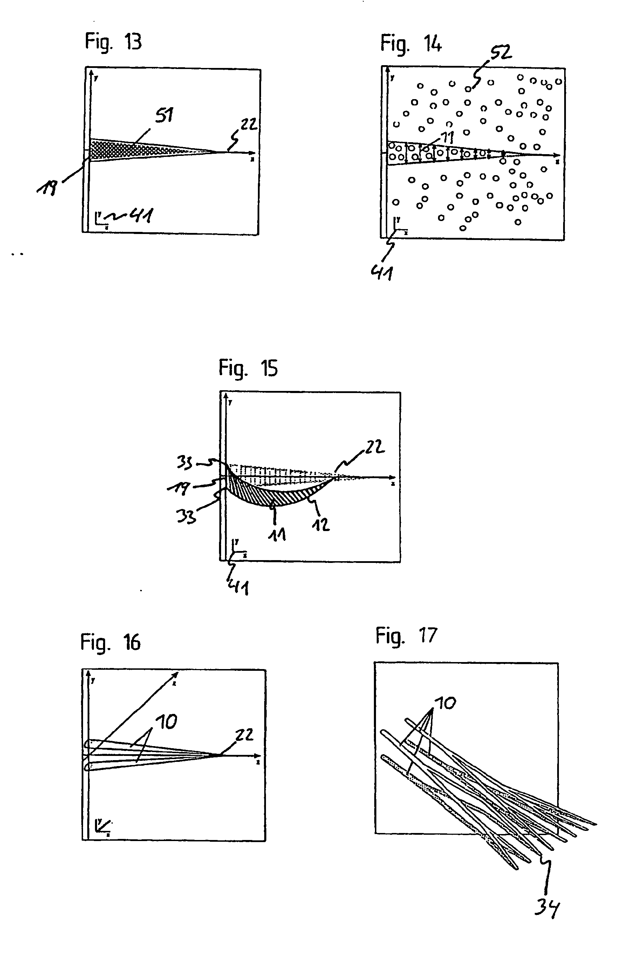

- Fig. 13: erfindungsgemäßes Bauteil im Querschnitt mit einem Kernteil und der einhüllenden Außenhaut;
- Fig. 14: luftgefülltes Bauteil mit seinen zugstabilen Querstreben;
- Fig. 15: in schematischer Darstellung die Wirkungsweise und Art der Verformung der Außenhaut und das Auslenken der Querstreben des erfindungsgemäßen Bauteils;
- Fig. 16: ein Bauteil, bestehend aus einem Wangenpaar, das sich in eine Richtung verjüngt;
- Fig. 17: ein Bauteil, bestehend aus einem Wagenpaar, wobei sich die Enden des Wagenpaares auffächern und verjüngen;

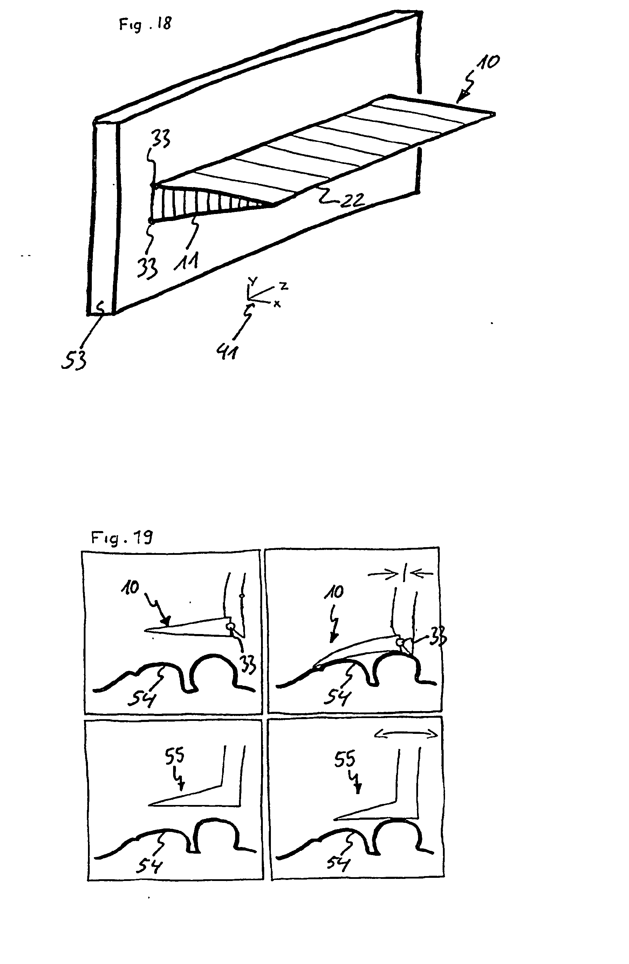

- Fig. 18: eine Anzahl von Bauteilen nebeneinander zu einem Lattenrost zusammengefügt;
- Fig. 19a-b: ein Bauteil, das als Lauffläche eines Fußes für Laufmaschinen ausgebildet ist beim Gehen auf unebenen Grund;
- Fig. 19c-d: Darstellung eines Fußes einer Laufmaschine ohne erfindungsgemäßen Bauteil auf unebenen Grund (nicht beansprucht);

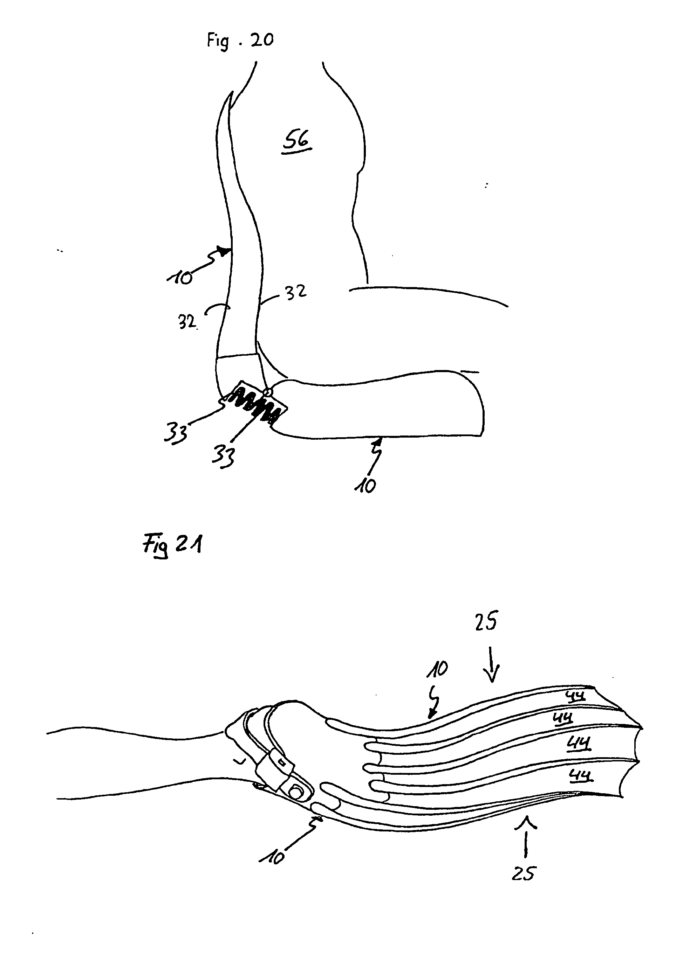

- Fig. 20: das erfindungsgemäße Bauteil als konstruktives Element für eine Stuhlrückenlehne und/oder Sitzfläche,
- Fig. 21: ein Anwendungsbeispiel als Taucherflosse, in der durch eine elastomere Membrane die erfindungsgemäßen Bauteile miteinander verbunden sind (nicht beansprucht);

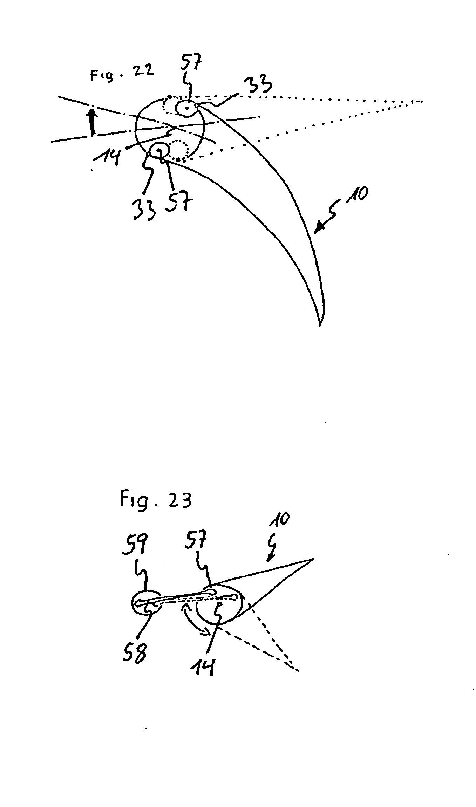

- Fig. 22: die Ansteuerung eines erfindungsgemäßen Bauteils Achswelle, in der zwei weitere Achswellen peripher gelagert sind;
- Fig. 23: die Ansteuerung eines erfindungsgemäßen Bauteils über eine Achswelle und eine weitere exzentrische Achswelle, die von einem Pendelantrieb über eine Schubstange angesteuert wird;
- Fig. 24: einen Querschnitt durch die erfindungsgemäße Vorrichtung mit einen aus Streben und Außenhaut aufgebauten Gerüst; ohne Achse und Hebel;
- Fig. 25: Explosionszeichnung des erfindungsgemäßen Bauteils und den als Vorprofil ausgebildeten Hebel, der an einer Achsewelle befestigt ist und mit einer Strebe über ein Befestigungsmittel in Wirkverbindung steht.

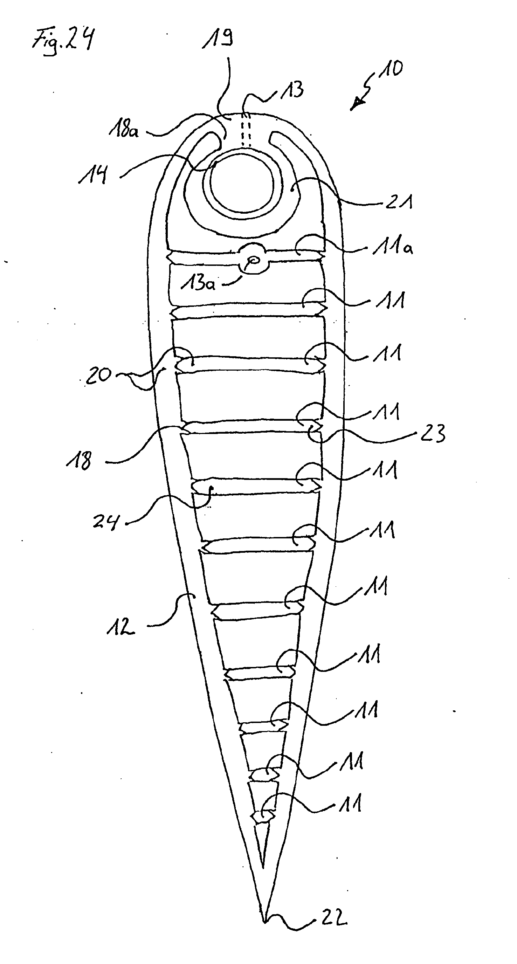

Die in der Fig. 24 dargestellte Vorrichtung 10 besteht im Wesentlichen aus dem Gerüst 20, das durch die Streben 11, 11a zusammen mit der Außenhaut 12 gebildet wird und ein stumpfes Ende 19 und ein spitzes Ende 22 aufweist. Die Streben 11, 11a sind durch ein elastisches Befestigungsmittel 18 mit der Außenhaut 12 verbunden und regelmäßig parallel zueinander beabstandet. Das Gerüst 20 weist im Bereich des stumpfen Endes 19 ein Ring 22 auf, der tangential der Außenhaut 12 angeformt ist und elastisch mit dieser in Wirkverbindung bringbar ist. Die Strebe 11a weist eine Bohrung 13a auf.

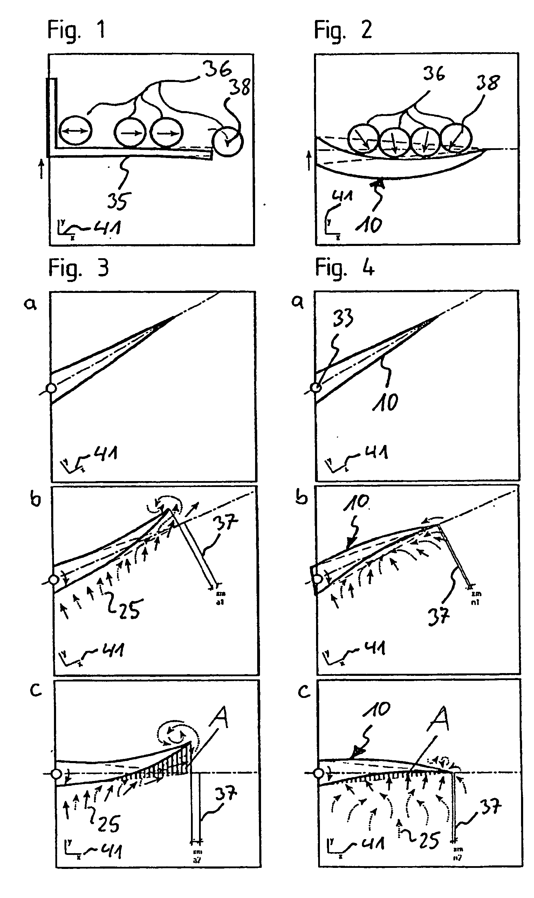

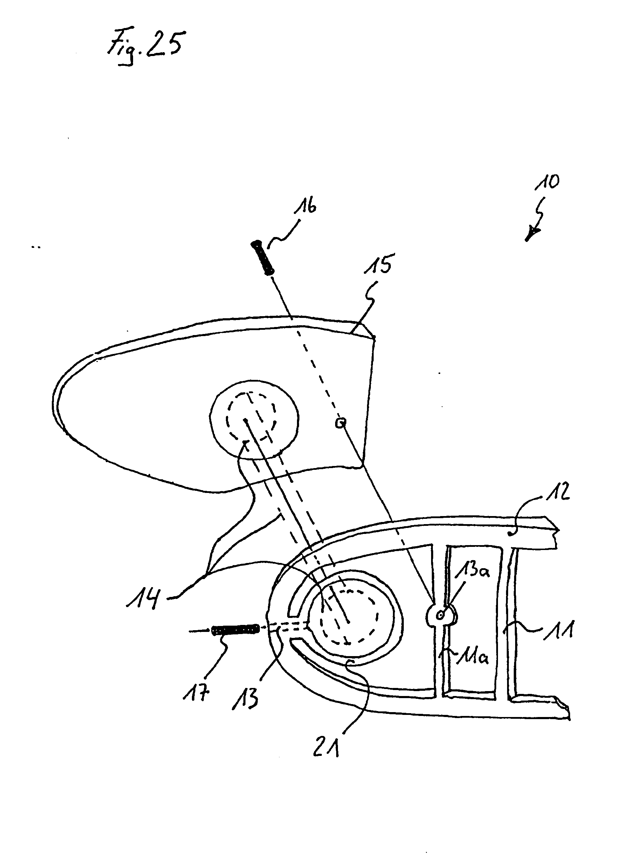

Fig. 25 zeigt die Vorrichtung 10, mit im Bereich des stumpfen Ende 19 angebrachten Vorprofil 15, die mit ihrer Bohrung 13 auf der Achswelle 14 aufgeschoben ist und dadurch drehbar gehalten wird. Auf derselben Achse ist das Gerüst 20 durch den angeformten Ring 21 durch einen Bolzen 17 im Scheitelpunkt des stumpfen Endes 19 arretiert. Die Strebe 11a ist über einen Zapfen 16, der durch die Bohrung 13 geführt wird, mit der Nase 15 wirkverbunden. Fig. 3 zeigt eine schematische Darstellung der Vorrichtung in entspannter Position und in gespannter Position. Es zeigt weiterhin, dass das stumpfe Ende 19 und das spitze Ende 22 entgegengesetzt der Hauptdruckrichtung 25 ausgelenkt werden. Durch eine, auf die flexible Außenhaut 12, einwirkende Auflast mit der Hauptdruckrichtung 25 werden das obere Ende 23 und das untere Ende 24 der Streben 11, 11a über die flexiblen Befestigungsmittel 18 gegeneinander verschoben und üben so eine Druck- und eine Zugspannung an der Au-βenhaut 12 aus.

Die Erfindung bezieht sich auf zwei keilförmig zueinander liegende, gelenkige Wangen, die in der Lage sind, durch lmpulseinwirkung entstehende lokale Systemverformung zeitgleich durch gleichartige Verformung des Systems an anderer Stelle in Richtung des Ursprungsimpulses auszugleichen. In der Regel wird diese Vorrichtung anwendungsgemäß aus mindestens zwei Querstreben bestehen, die zueinander entweder parallel oder verspreizt verlaufen.

Um das eigentliche Prinzip zu erklären, wird die nachfolgende Darstellung auf eine Strebe reduziert. Erfindungsgemäß kann die Strebe aber auch in beliebiger Zahl und Anordnung, also zum Beispiel parallel zueinander oder in verspreizter Form, angeordnet werden und durch eine Oberhaut verbunden werden (Fig. 1).

Eine Strebe besteht aus mindestens zwei in der Regel gleichlangen Wangen, die in deiner keilförmigen Grundform an einem Ende zusammenlaufen und dort miteinander verbunden sind. Am anderen, kraftgebenden Ende sind die Wangen in einem anwendungsabhängigen Abstand zueinander befestitigt.

Die Wangen können fest mit ihrem kraftgebenden Körper verbunden sein. Es ist aber auch möglich, dass nur eine Wange starr befestigt ist, die andere dagegen in Richtung der Ausdehnung der Streben verschiebbar ist. Außerdem können beide Wangen mit dem kraftgebenden Körper beweglich verbunden sein (Fig. 2).

Die Ausformung der Wangen selbst kann dabei ebenso variabel sein. Die einzelnen Wangen können dabei geradlinig oder zueinander konvex oder konkav bzw. "konvex/konkav" - S-förmig ausgebildet sein, wobei die Steigung wiederum anwendungsabhängig ist (Fig. 3).

Die Wangen sind miteinander durch Abstandhalter verbunden, die ihrem Wesen nach im rechten Winkel zur Mittelachse des entspannten Systems verlaufen und an der Innenseite der Wangen drehbar gelagert sind. Dabei spielt die Ausformung der Abstandhalter keine Rolle, solange sie den auftretenden Kräften standhalten können (Fig. 4). Die Abstandhalter werden im Folgenden vereinfacht als Sprossen bezeichnet.

Auf ein Achsenkreuz übertragen stellt sich die Strebe folgendermaßen dar: Die Mittelachse der Strebe in Seitenansicht liegt auf der X-Achse bei y = 0. Die Befestigungspunkte liegen bei x = 0 und auf der Y-Achse bei spiegelbildlich gleichen Werten. Die Befestigungspunkte der Sprossen verlaufen dabei parallel zur Y-Achse durch das ganze System. Die Verbindung der beiden Wangen untereinander ist bei y = 0.

Die so beschriebene Strebe ist in der Lage, in Y-Richtung einwirkende lmpulse so umzuwandeln, dass deren Auftreffen auf den Keil zunächst zu einer kurvenförmigen Verformung führt. Diese lokale Verformung wird durch die systeminternen Sprossen sowohl an die dem Impuls entgegengelegene (-ny) Wange übertragen, als auch auf die dem Impuls zugewandte (+ny) Seite. Die impulsabgewandte Wange übt dabei einen Druck auf die Spitze aus. Dadurch zieht die impulszugewandte Wange infolge des gemeinsamen Befestigungspunktes, der unbeweglich bleibt, an der Verbindung am vorderen Ende bei y = 0.

Ausgehend von einer geradlinigen Ausformung der beiden Wangen bleibt die Spitze erfindungsgemäß auf der X-Achse bei y = 0 trotz der vom Impuls verursachten Verformung. D.h. diese Strebe gleicht die lokale Verformung durch eine Gegenbewegung gleicher Impulsstärke an anderer Stelle aus.

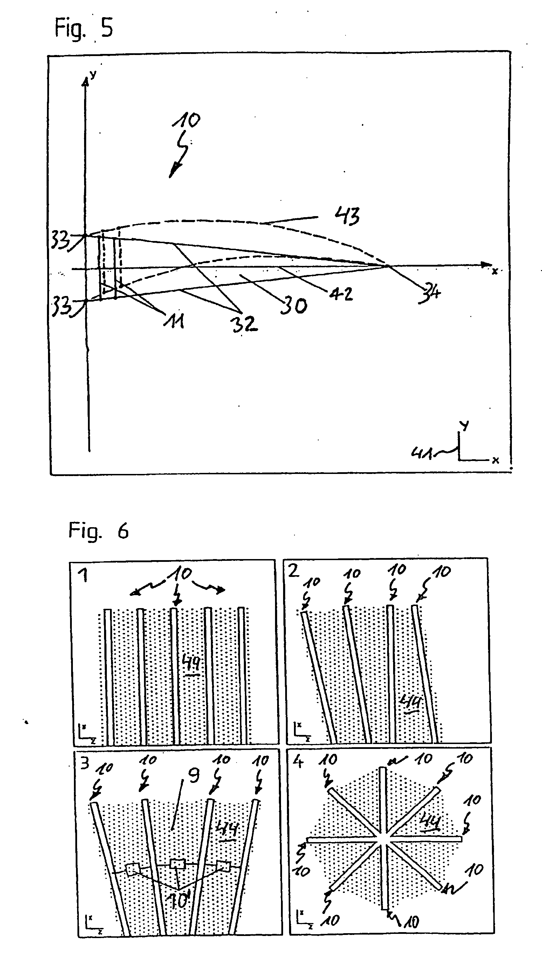

Bei dieser Verformung wird lediglich die Gesamtstrebe in ihrer Gesamtlänge auf der X-Achse um mx verkürzt. Dies gilt jedoch nur bei einer der Sprossenkonstruktion angemessenen lmpulsstärke (Fig. 5). Dabei hängt der Energieverlust bei der Strebenverformung von der Elastizität in Orientierung der Bewegung der Wangen bzw. der drehbaren Befestigung der Sprossen an den Wangen ab.

Die Grenze der Strebenverformung hängt unter anderem vom Abstand der Sprossen und deren Ausformung bzw. der gesamten Konstruktion ab. Sowohl die Wangen als auch die Sprossen müssen dabei zug- und druckstabil ausgebildet sein.

Werden anwendungsgemäß mehrere Streben aneinandergereiht, reagiert jede Strebe jeweils auf den auf sie ausgeübten Druck individuell, sofern nicht das Material der gegebenenfalls gespannten Oberhaut die lmpulseinwirkung auf die anderen Streben überträgt und diese mit auslenkt.

Dieses Bauteil weist einen dynamischen Hebel 28 auf, der über eine Achse, die in ihrer Lage veränderbar sein kann. Der Hebel besteht aus einem Segment, das sich nach oben und/oder unten ausdehnt und an wenigstens zwei benachbarten Punkten 29 befestigt ist. Das sich daraus ergebende keilförmige Gebilde (Querstrebe 11) ist am Berührungspunkt 34 an der Spitze des gesamten Systems miteinander verbunden und wird von Distanzhaltern 3 in konstantem Abstand gehalten. Die die Ausdehnung kennzeichnenden gelenkigen Au-βenwangen 32 sind in Orientierung ihrer Ausdehnung elastisch zug- und druckstabil ausgebildet.

Die Außenwangen 32 verlaufen von ihren Befestigungspunkten 29 geradlinig, gleichlang zu ihrem gemeinsamen Verbindungspunkt 34, wobei sie von ihren Befestigungspunkten 29 verschieden lang zu ihrem gemeinsamen Verbindungspunkt 34 verlaufen können.

Eine beliebige Anzahl von Querstreben 11 sind entweder parallel, verspreizt zueinander oder mit den stumpfen Enden zueinander in einer Linie bzw. mehrere sternförmig angeordnet. Die jeweils nebeneinander liegenden Querstreben 11 sind mit einer Außenhaut 14 aus flexiblem Überzugsmaterial umhüllt.

Die Seitenansicht einer Querstrebe 11 ist variabel und die Wangen 32, die zueinander keilförmig stehen, sind geradlinig, konvex, konkav" konvex/konkav (S-förmig) oder als eine andere anwendungsabhängige Freiform ausgebildet. Die Querstreben 11 werden in einem bestimmten Abstand durch dazwischenliegende Verbindungsvorrichtungen 10 gehalten, wobei sie durch zwischenliegende Verbindungsvorrichtungen in variablem Abstand eingestellt werden.

Die Querstreben 11 werden von ihren drehbar gelagerten Befestigungspunkten 29 aus in zwei Dimensionen bewegt; dadurch wird eine zusammengesetzte Bewegung erzeugt.

Die Querstreben 11 können eine flächige Ausdehnung haben, wobei die Wangen 32 von einer Fläche gebildet werden können und die Sprossen dabei zwischen den beiden Flächen punktuell oder als durchlaufende Bänder angeordnet sind. Mindestens drei der keilförmigen Querstreben 11 sind ringförmig um einen Hohlkörper herum derart angeordnet, dass sich dadurch auch eine verjüngende (C) und/oder erweiternde (B) Rohrform bildet, die in der Lage ist, Strömungen dynamisch umzuleiten.

Die Konstruktion zur Versteifung der Ringform im Verlauf des Systems ist mit federnden oder starren Ringen 12 zur Stabilisierung und Synchronisierung versehen. Die Querstreben 11 sind dabei von einer elastischen Innen- und eventuell einer Außenhaut überzogen. Mehrere Querstreben 11 können parallel über eine Strecke so nebeneinander gereiht sein, dass sie unabhängig voneinander bewegt werden können und sich daraus eine in sich bewegliche langgestreckte Konstruktion ergibt, mit der eine wellenförmige Bewegung ausgeführt werden kann.

Die beiden die Außenflächen bildenden Außenwangen werden mit Hilfe eines elastischen, jedoch druckstabilen Formteils 13 in konstantem Abstand gehalten, ohne sie dabei in ihrer Verschiebung gegeneinander bzw. zum Kern zu behindern. Der Abstand kann durch eine geleeartige Zwischenfüllung 13 in Verbindung mit einer die Strebe umhüllenden geschlossenen Tasche eingehalten werden. Das System kann dabei mit einem einströmendem Fluid wie Wasser oder Luft gefüllt sein.

Die Profilform wird durch das aus der Bewegung herleitende in das System einzuleitende Medium, Wasser bzw. Luft, gefüllt und erhält dadurch seine Stabilität. Die Sprossen können dabei nur zugstabil ausgebildet sein.

Die Befestigungspunkte 29 sind beide starr mit ihrem kraftgebenden Körper verbunden, wobei nur eine Wange 32 starr befestigt, die andere dagegen in Richtung der Ausdehnung der Querstrebe 11 verschiebbar ist. Beide Wangen 32 können individuell angesteuert werden.

Die Befestigungspunkte 29 der Sprossen liegen im Querschnittsinneren der U-förmig ausgebildeten Außenwange 32. Die Wangen 32 können sich vom kraftgebenden Ende ausgehend zum spitzen Ende hin in ihrem Durchmesser verringern. Auch kann sich eine Wange 32 vom kraftgebenden Ende ausgehend zum spitzen Ende hin in ihrem Durchmesser verändern oder von einer zunächst einsträngigen Wange ausgehend in zwei oder mehrere Wangenenden auffächern.

Es können Distanzhalter 3 vorgesehen sein, die zug- und druckstabil ausgebildet sind. Die Distanzhalter 3 können rechtwinklig zur Mittelachse des entspannten Systems verlaufen und an den Innenseiten der Außenwangen 32 drehbar gelagert sein. Dabei kann im Zwischenraum zwischen den Distanzhaltern 3 systemintern diagonal eine Druck- oder Zugbewegung ausgeübt werden.

### Bezugszeichen

- 10: Vorrichtung
- 11, 11 a: Streben
- 12, 12a: Außenhaut
- 13: Bohrung
- 14: Hauptachse
- 15: Nase
- 16: Zapfen
- 17: Bolzen
- 18, 18a: flexibles Befestigungsmittel
- 19: stumpfes Ende
- 20: Gerüst
- 21: Ring
- 22: spitzes Ende
- 23: oberes Ende
- 24: unteres Ende
- 25: Hauptdruckrichtung
- 26: Freiraum
- 27: Innenseite
- 28: Hebel
- 29: benachbarte Punkte
- 30: keilförmiges Strebengerüst
- 31: Berührungspunkt
- 32: gelenkige Außenwange
- 33: Befestigungspunkt
- 34: gemeinsamer Verbindungspunkt
- 35: Hubgabel
- 36: zylindrische Werkstücke
- 37: wirksame Länge
- 38: Bewegungsrichtung
- 39: gespannter Zustand
- 40: entspannter Zustand
- 41: Koordinatensystem
- 42: Mittelachse
- 43: Verformung
- 44: Membrane
- 45: Auf- und Abbewegung
- 46: seitwärts gerichtete Bewegung
- 47: Stabilisationsring
- 48: Rohr
- 49: sich verbreiternde Position
- 50: sich verjüngende Position
- 51: Kernteil
- 52: Luftmoleküle
- 53: Rahmen
- 54: unebene Oberfläche
- 55: Fuß
- 56: Person
- 57: periphere Achswelle
- 58: Schubstange
- 59: Antrieb

## Patentansprüche

1. Stuhl **gekennzeichnet durch** eine Stuhllehne und/oder eine Sitzfläche, umfassend ein Bauteil (20) mit mindestens zwei flexiblen Wangen (32), die in einer keilförmigen Grundform an einem Ende zusammenlaufen und dort verbunden sind und am anderen Ende in einem Abstand voneinander befestigt sind und die **durch** Distanzhalter (3) miteinander verbunden sind, die an den Wangen (32) drehbar befestigt sind.

2. Stuhl nach Anspruch 1, **dadurch gekennzeichnet, dass** die Bauteile (20) über eine gemeinsame Achswelle miteinander verbunden sind.

3. Stuhl nach Anspruch 1 oder 2, **dadurch gekennzeichnet, dass** das eine Ende des als Stuhllehne ausgestalteten Bauteils (20) nach oben weist.

4. Stuhl nach einem der oben genannten Ansprüche, **dadurch gekennzeichnet, dass** ein elastisches Befestigungsmittel (18) vorgesehen ist, durch das Streben (11, 11 a) mit der Wange (32) verbunden sind.

5. Stuhl nach Anspruch 4, **dadurch gekennzeichnet, dass** die Streben (11, 11a) nur zugstabil oder druck- und zugstabil ausgestaltet sind.

6. Stuhl nach Anspruch 4, **dadurch gekennzeichnet, dass** die Streben (11, 11a) an den Wangen (32) in Befestigungspunkten (29) gelenkig gelagert sind.

7. Stuhl nach einem der oben genannten Ansprüche, **dadurch gekennzeichnet, dass** ein Hebel (28) vorgesehen ist, durch den die Form der Wange (32) verstellbar ist.

8. Stuhl nach Anspruch 4, **dadurch gekennzeichnet, dass** zwischen den Streben (11, 11a) Verbindungsvorrichtungen (10) vorgesehen sind, durch die der Abstand der Streben (11, 11 a) variabel ist.

9. Stuhl nach Anspruch 4, **dadurch gekennzeichnet, dass** die Enden der Streben (11, 11a) unter der Kraftwirkung gegeneinander verschiebbar und eine Druck- und/oder Zugspannung auf die Wange (32) ausübend ausgestaltet sind.

10. Stuhl nach einem der oben genannten Ansprüche, **dadurch gekennzeichnet, dass** die Wangen (32) S-förmig ausgestaltet sind.

11. Stuhl nach einem der oben genannten Ansprüche, **dadurch gekennzeichnet, dass** eine Wange starr befestigt, die andere dagegen in Richtung der Wangen (32) verschieblich ist.

12. Stuhl nach einem der Ansprüche 1 bis 11, **dadurch gekennzeichnet, dass** die Wangen (32) fest mit ihrem kraftgebenden Körper (53) verbunden sind.

13. Stuhl nach einem der Ansprüche 1 bis 12, **dadurch gekennzeichnet, dass** beide Wangen (32) mit dem kraftgebenden Körper beweglich verbunden sind.

14. Stuhl nach einem der oben genannten Ansprüche, **dadurch gekennzeichnet, dass** beide Wangen (32) individuell angesteuert werden können.

15. Stuhl nach einem der oben genannten Ansprüche, **dadurch gekennzeichnet, dass** zwischen den Distanzhaltern (3) systemintern diagonal eine Druck- oder Zugbewegung ausgeübt werden kann.

16. Stuhl nach einem der oben genannten Ansprüche, **dadurch gekennzeichnet, dass** das Bauteil (20) mit einer Außenhaut (32) eine einstückige Einheit bildet.

17. Stuhl nach einem der oben genannten Ansprüche, **dadurch gekennzeichnet, dass** mehrere Bauteile (20) parallel zueinander angeordnet und durch eine Oberhaut miteinander verbunden sind.

## Claims

1. Chair **characterised by** a chair back and/or a seat surface, comprising a component (20) having at least two flexible side pieces (32), which taper in a wedge-shaped basic shape at one end, are connected there, and are secured at the other end at a distance from each other and which are connected to each other by spacers (3), which are rotatably secured to the side pieces (32).

2. Chair according to Claim 1, **characterised in that** the components (20) are connected to each other via a common axle shaft.

3. Chair according to Claim 1 or 2, **characterised in that** the one end of the component (20) designed as the chair back faces upwards.

4. Chair according to any one of the preceding claims, **characterised in that** an elastic securing means (18) is provided, by means of which braces (11, 11a) are connected to the side piece (32).

5. Chair according to Claim 4, **characterised in that** the braces (11, 11a) are designed so as to be solely resistant to tension or resistant to compression and tension.

6. Chair according to Claim 4, **characterised in that** the braces (11, 11a) are mounted to the side pieces (32) at securing points (29) in an articulated manner.

7. Chair according to any one of the preceding claims, **characterised in that** a lever (28) is provided, by means of which the shape of the side piece (32) can be adjusted.

8. Chair according to Claim 4, **characterised in that** connection devices (10) are provided between the braces (11, 11a), by means of which connection devices the distance between the braces (11, 11a) can be varied.

9. Chair according to Claim 4, **characterised in that** the ends of the braces (11, 11a) are displaceable in relation to one another under the action of force and are designed to exert a pressure and/or tensile stress on the side piece (32).

10. Chair according to any one of the preceding claims, **characterised in that** the side pieces (32) are designed in an S-shape.

11. Chair according to any one of the preceding claims, **characterised in that** one side piece is rigidly secured, the other can, in contrast, be displaced in the direction of the side pieces (32).

12. Chair according to any one of Claims 1 to 11, **characterised in that** the side pieces (32) are connected in a fixed manner to their body (53), which provides force.

13. Chair according to any one of Claims 1 to 12, **characterised in that** both side pieces (32) are moveably connected to the body, which provides force.

14. Chair according to any one of the preceding claims, **characterised in that** both side pieces (32) can be individually controlled.

15. Chair according to any one of the preceding claims, **characterised in that** a pressure or tension movement can be exerted diagonally within the system between the spacers (3).

16. Chair according to any one of the preceding claims, **characterised in that** the component (20) forms an integral unit with an outer layer (32).

17. Chair according to any one of the preceding claims, **characterised in that** a plurality of components (20) are arranged parallel to each other and are connected by a cover layer.

## Revendications

1. Chaise **caractérisée par** un dossier de chaise et/ou une surface d'assise, comprenant une pièce (20) avec au moins deux joues flexibles (32), qui se rejoignent à une extrémité, selon une forme de base en coin, et y sont reliées, et qui, à l'autre extrémité, sont fixées selon un espacement donné l'une par rapport à l'autre, et sont reliées mutuellement par des éléments d'écartement (3) fixés de manière rotative aux joues (32).

2. Chaise selon la revendication 1, **caractérisée en ce que** les pièces (20) sont reliées mutuellement par l'intermédiaire d'un arbre d'articulation commun.

3. Chaise selon la revendication 1 ou la revendication 2, **caractérisée en ce que** ladite une extrémité de la pièce (20) réalisée en tant que dossier de chaise, est dirigée vers le haut.

4. Chaise selon l'une des revendications mentionnées ci-dessus, **caractérisée en ce qu'**il est prévu un moyen de fixation élastique (18) par l'intermédiaire duquel des entretoises (11, 11a) sont reliées à la joue (32).

5. Chaise selon la revendication 4, **caractérisée en ce que** les entretoises (11, 11a) sont conçues de manière à être uniquement stables en traction ou stables en compression et en traction.

6. Chaise selon la revendication 4, **caractérisée en ce que** les entretoises (11, 11a) sont montées de manière articulée sur les joues (32), en des points de fixation (29).

7. Chaise selon l'une des revendications mentionnées ci-dessus, **caractérisée en ce qu'**il est prévu un levier (28) par l'intermédiaire duquel il est possible de régler la forme de la joue (32).

8. Chaise selon la revendication 4, **caractérisée en ce qu'**entre les entretoises (11, 11a) sont prévus des dispositifs de liaison (10) par l'intermédiaire desquels il est possible de faire varier l'espacement des entretoises (11, 11a).

9. Chaise selon la revendication 4, **caractérisée en ce que** les extrémités des entretoises (11, 11a) sont conçues pour coulisser les unes par rapport aux autres sous l'action d'une force en exerçant une contrainte de compression et/ou de traction sur la joue (32).

10. Chaise selon l'une des revendications mentionnées ci-dessus, **caractérisée en ce que** les joues (32) sont d'une configuration en forme de S.

11. Chaise selon l'une des revendications mentionnées ci-dessus, **caractérisée en ce qu'**une joue est fixée de manière rigide, l'autre étant par contre coulissante dans la direction des joues (32).

12. Chaise selon l'une des revendications 1 à 11, **caractérisée en ce que** les joues (32) sont reliées de manière fixe avec leur corps (53) générant une force.

13. Chaise selon l'une des revendications 1 à 12, **caractérisée en ce que** les deux joues (32) sont reliées de manière mobile au corps générant une force.

14. Chaise selon l'une des revendications mentionnées ci-dessus, **caractérisée en ce que** les deux joues (32) peuvent être commandées individuellement.

15. Chaise selon l'une des revendications mentionnées ci-dessus, **caractérisée en ce qu'**entre les éléments d'écartement (3) peut être exercé en diagonale, de manière interne au système, un mouvement de compression ou de traction.

16. Chaise selon l'une des revendications mentionnées ci-dessus, **caractérisée en ce que** la pièce (20) forme, avec une membrane extérieure (32), une unité d'un seul tenant.

17. Chaise selon l'une des revendications mentionnées ci-dessus, **caractérisée en ce que** plusieurs pièces (20) sont agencées parallèlement les unes aux autres et sont reliées mutuellement par une membrane supérieure.
